(19) **Europäisches Patentamt / European Patent Office / Office européen des brevets**

(11) **EP 1 229 665 B1**

(12) **FASCICULE DE BREVET EUROPEEN**

(45) Date de publication et mention
de la délivrance du brevet:
**31.10.2007 Bulletin 2007/44**

(51) Int Cl.:
*H04B 1/707* (2006.01)   *H04B 1/68* (2006.01)
*G01S 1/68* (2006.01)

(21) Numéro de dépôt: **01403201.5**

(22) Date de dépôt: **11.12.2001**

(54) **Procédé et dispositif de traitement en réception d'un signal numérique à bande étalée**

Verfahren und Vorrichtung zur Verarbeitung eines empfangenen digitalen Spreizspektrumsignals

System and method for processing a received CDMA digital signal

(84) Etats contractants désignés:
**BE DE FR GB IT**

(30) Priorité: **22.12.2000 FR 0016877**

(43) Date de publication de la demande:
**07.08.2002 Bulletin 2002/32**

(73) Titulaire: **Thales**
**75008 Paris (FR)**

(72) Inventeurs:
• **Revol, Marc,**
**Thales Intellectual Property**
**94117 Arcueil Cedex (FR)**

• **Martin, Nicolas,**
**Thales Intellectual Property**
**94117 Arcueil Cedex (FR)**
• **Derville, Aymeric,**
**Thales Intellectual Property**
**94117 Arcueil Cedex (FR)**

(74) Mandataire: **Beylot, Jacques**
**Marks & Clerk France**
**31-33 Avenue Aristide Briand**
**94117 Arcueil Cédex (FR)**

(56) Documents cités:
**US-A- 6 148 022**

Printed by Jouve, 75001 PARIS (FR)

**Description**

La présente invention est relative au traitement en réception d'un signal de transmission numérique à bande étalée, obtenu au moyen d'un code d'étalement résultant d'un découpage des éléments binaires d'un code binaire pseudo-aléatoire, à une cadence multiple et synchrone de ces éléments binaires.

Les signaux de transmission numérique à bande étalée sont très utilisés dans les systèmes mettant en oeuvre des satellites car ils manifestent une grande tolérance aux signaux interférents que ce soient des signaux parasites puissants à bande étroite provoqués par l'activité humaine au voisinage des lieux de réception ou d'autres signaux de transmission en bande étalée occupant la même bande de fréquence avec un niveau de puissance analogue.

Dans les transmissions de données par satellites, les puissances des émetteurs embarqués à bord des satellites étant nécessairement limitées, l'un des plus importants problèmes à résoudre est celui des bruits radioélectriques parasites présents dans l'environnement de réception qui ont souvent une puissance très supérieure à celle du signal utile. Comme ces bruits, qui, pour la plupart, sont non intentionnels, sont essentiellement des bruits à spectre étroit, on a très tôt cherché à réduire leur nuisance en réception, en utilisant la technique de l'étalement de spectre plus connue sous la dénomination anglo-saxonne "Spread Spectrum", qui consiste, à puissance d'émission égale, à élargir la bande du signal transmis pour augmenter la probabilité pour un signal de transmission, d'avoir une majorité des composantes fréquentielles non masquées par des bruits.

La technique d'étalement de spectre consiste à moduler le signal de données disponible sous une forme d'une suite d'états binaires par un code d'étalement également constitué d'une suite d'états binaires mais présentant les caractéristiques spectrales se rapprochant de celles d'un bruit blanc dans la bande de fréquence allouée. Le code d'étalement est engendré par un générateur de code binaire pseudo-aléatoire, avec un débit nettement supérieur à celui des données. Il peut être utilisé, soit pour moduler la fréquence de la porteuse utilisée pour transmettre les données, on parle alors d'étalement par sauts de fréquence ("frequence hopping spreading" en anglo-saxon), soit pour moduler les données avant qu'elles ne servent à moduler la porteuse utilisée pour leur transmission, on parle alors d'étalement direct par séquence plus connu sous la dénomination anglo-saxonne DSSS ("Direct-Sequence Spread Spectrum"). Le désétalement se fait en réception, par corrélation du signal reçu avec une réplique du code engendrée localement en synchronisme avec la version du code modulant le signal reçu. Il a pour effet d'abaisser le niveau des différents bruits qui, par nature, ne sont pas corrélés avec le code d'étalement. Parmi les bruits éliminés, il peut y avoir d'autres signaux à bande étalée à la condition que ces autres signaux utilisent des codes d'étalement différents présentant des fonctions d'intercorrélation nulles ou très faibles avec le code d'étalement concerné. Un certain nombre de classes de codes binaires pseudo-aléatoires à intercorrélations nulles ou très faibles, dits codes orthogonaux ont été proposés à cette fin, de sorte que l'étalement de spectre se prête facilement à la séparation de différents intervenants dont les signaux occupent une même bande de fréquence.

L'une des techniques les plus répandues dans les systèmes de transmission de données par satellites utilisant l'étalement de spectre est celle de l'accès multiple à répartition par codes connue sous le sigle CDMA provenant de l'abréviation de l'expression anglo-saxonne "Code Division Multiple Access" mettant en oeuvre la méthode DSSS d'étalement direct par séquence sur les données pour engendrer un signal porteur d'information modulant en phase une porteuse de transmission.

Cette technique CDMA est reprise dans les systèmes de navigation par satellites car elle permet, en réception, à la fois, de séparer les signaux émis dans des bandes de fréquence identiques par les différents satellites de la constellation d'un système de navigation et d'apprécier les distances et vitesses relatives entre le récepteur et les satellites visibles du récepteur qui sont les informations nécessaires, avec les positions et vitesses de défilement des satellites sur leurs orbites, pour les calculs de position et de vitesse du porteur du récepteur. L'identification du satellite émetteur d'un signal de navigation se fait à partir du code d'étalement qui lui est réservé. Les distances relatives sont calculées à partir des temps de transmission de signaux émis en bande étalée par la constellation de satellites, temps de transmission qui sont appréciés à partir des retards des générateurs des répliques des codes d'étalement localisés dans le récepteur par rapport aux générateurs de codes d'étalement localisés dans les satellites. Les vitesses relatives sont calculées à partir des déphasages doppler affectant au niveau du récepteur, les porteuses de transmission utilisées par les satellites.

La précision de la localisation dépend de différents paramètres dont la précision et l'ambiguïté des mesures des distances relatives récepteur-satellites visibles. La précision d'une mesure de distance relative récepteur-satellite dépend directement de la précision de synchronisation qu'il est possible de réaliser en réception entre la version engendrée localement du code d'étalement identifiant le satellite et sa version initiale à l'émission dans le satellite. Cette précision est d'autant meilleure que le débit du code d'étalement est élevé, c'est-à-dire que la durée d'un de ses éléments binaires est faible, mais, plus le débit du code d'étalement est élevé, plus la bande de fréquence occupée est large. Le système de navigation par satellites le plus utilisé actuellement, est le GPS (sigle correspondant à l'expression anglo-saxonne "Global Positioning System) qui a été conçu dans les années 1970. Il comporte une constellation de 24 satellites défilants placés sur 6 plans orbitaux quasiment circulaires avec un rayon de l'ordre de 26.000 km, inclinés de 55° sur l'équateur et également répartis autour de celui-ci, avec 4 satellites également répartis sur chaque plan orbital. Il met en oeuvre deux catégories de signaux de navigation provenant de sa constellation de satellites, l'une constituée de signaux de navigation faiblement étalés dite C/A (de l'anglo-saxon "coarse/acquisition") et l'autre constituée de signaux de navigation plus fortement étalés dite P (de l'anglo-saxon "precise"). Les signaux de navigation de type C/A sont étalés avec un code d'étalement de type binaire pseudo-aléatoire de courte durée, 1 ms et de faible débit, 1,023 MHz tandis que ceux de type P sont étalés avec un code d'étalement de type binaire pseudo-aléatoire de très longue durée, 7 jours et de fort débit 10,23 MHz. Chaque satellite émet des signaux de navigation sur deux porteuses dans la bande L, une porteuse $L_1$ à 1575,42 MHz et une porteuse $L_2$ à 1227,60 MHz. Chaque porteuse est modulée en mode PSK (de l'anglo-saxon "Phase Shift Keying") par la somme modulo 2 du signal de navigation constitué d'une suite de données binaires ayant un débit de 50 Hz, et du code d'étalement. La modulation de la porteuse $L_1$ présente deux composantes en quadrature, l'une constituée des signaux de navigation de type C/A et l'autre des signaux de navigation de type P. La modulation de la porteuse $L_2$ présente une seule composante constituée des signaux de navigation de type P. L'utilisation de deux fréquences porteuses par satellites permet une mesure de l'effet ionosphérique sur la vitesse de propagation des ondes.

Les signaux de navigation de type C/A assurent un service dit standard, disponible pour tout utilisateur, sans restriction d'accès, tandis que les signaux de navigation de type P, permettant un positionnement plus précis, peuvent être protégés par un cryptage qui permet à tout instant au propriétaire du système GPS d'en limiter l'usage à des utilisateurs choisis par agrément.

A la conception du système de navigation par satellites GPS, aucune possibilité de limitation d'accès n'a été prévue pour le service standard, car on ne pensait pas qu'il soit possible de réaliser à partir des signaux de navigation qu'il dispense, une navigation suffisamment précise pour qu'elle puisse constituer une menace sérieuse pour le propriétaire du système en cas d'une utilisation par une entité hostile. Cependant, ce n'est plus le cas maintenant, avec l'évolution de la technique, notamment avec l'apparition de la technique dite GPS différentiel qui consiste à placer dans la zone où l'on désire évoluer, des station de référence qui déterminent les erreurs de positionnement commises localement par le système de navigation GPS et les transmettent à un récepteur GPS évoluant dans leur voisinage, pour qu'il en tienne compte. Il apparaît donc intéressant, à l'heure actuelle de pouvoir rendre le service standard de navigation indisponible localement sans pour autant affecter le service de navigation réservé aux utilisateurs agréés. Cela n'est pas possible avec le système de navigation GPS actuel qui ne permet qu'une suppression totale du service standard de navigation affectant la totalité de la surface terrestre. En effet, un brouillage local de la bande de fréquence des signaux de navigation du service standard brouille également les signaux de navigation du service réservé aux utilisateurs agréés puisque ceux-ci présentent dans cette bande une énergie non négligeable.

Pour la modernisation du système de navigation par satellites GPS dont la conception remonte à plus de trente ans, il est prévu de remédier à cet inconvénient en utilisant pour le service de navigation réservé aux utilisateurs agréés un code d'étalement spécial ne présentant plus, dans la bande de fréquence qu'il occupe, un spectre d'énergie uniforme comme c'est le cas d'un code d'étalement classique de type binaire pseudo-aléatoire mais un spectre d'énergie avec un trou au niveau de la bande occupée par le code d'étalement appliqué aux signaux de navigation du service standard. Ainsi, un brouillage de la bande des signaux du service standard n'affectera plus les signaux de navigation du service réservé aux utilisateurs agréés qui pourront continuer à recourir au système de navigation par satellites pour leur propre navigation.

Une manière d'y parvenir est décrite dans le brevet américain US 6,148,022. Elle consiste à transmettre simultanément, dans une même bande de fréquence allouée, deux signaux indépendants à bande étalée, l'un, pour le service standard, étalé avec une suite binaire pseudo-aléatoire formatée en NRZ(L) et présentant un spectre avec un maximum d'énergie au centre de la bande de fréquence allouée et l'autre, pour le service réservé, étalé avec une suite binaire pseudo-aléatoire orthogonale à la première, formatée en biphase-L et présentant un spectre avec un minimum d'énergie au centre de la bande allouée.

Une autre manière d'y parvenir est de concevoir pour le service réservé, un code d'étalement présentant un trou médian dans son spectre d'énergie, cela à partir d'un code d'étalement binaire pseudo-aléatoire classique dont les éléments binaires sont soumis à un découpage régulier ou irrégulier, à une cadence multiple et synchrone de ces derniers pour éliminer toute composante continue au niveau des éléments binaires. Ce découpage, qui s'apparente à une modulation auxiliaire à doubles bandes latérales sans porteuse, provoque un dédoublement du spectre de fréquence du code binaire pseudo-aléatoire initial et le placement de chacune des deux versions du spectre au niveau de deux bandes latérales. Le débit du code d'étalement binaire pseudo-aléatoire initial soumis à un découpage de ses éléments binaires est choisi de manière à obtenir pour ce code d'étalement binaire pseudo-aléatoire initial une largeur de spectre de fréquence logeable dans la largeur de l'une des deux parties de la bande affectée aux signaux de navigation réservée aux utilisateurs agréés, de part et d'autre de la bande de fréquence affectée aux signaux de navigation du service standard. Le multiple du débit du code d'étalement binaire pseudo-aléatoire auquel correspond la fréquence du découpage, c'est-à-dire le nombre de découpes possibles d'un élément binaire de code initial, est choisi de manière à amener les deux composantes du spectre dédoublé de part et d'autre de la bande affectée aux signaux de navigation du service standard, dans la bande affectée aux signaux de navigation du service réservé aux utilisateurs agréés. Après découpage, le débit des nouveaux codes d'étalement obtenus se trouve multiplié dans le rapport de la fréquence de découpage au débit du code d'étalement binaire pseudo-aléatoire initial et correspond au débit d'un code d'étalement binaire pseudo-aléatoire habituel occupant la bande totale affectée aux signaux de navigation du service réservé aux utilisateurs agréés. Le débit final des codes d'étalement est donc inchangé malgré la présence nouvelle d'un trou au centre du spectre de fréquence, de sorte que la précision de la synchronisation qu'il est possible d'obtenir en réception reste également inchangée. La modification apportée ne pénalise donc pas la précision de la navigation. Elle influe sur la forme du pic d'autocorrélation du code qui se trouve fractionné en plusieurs pics mais n'augmente pas les lobes secondaires et donc les possibilités de fausses acquisitions du code en réception.

Une autre justification de l'utilisation de ces codes spéciaux d'étalement résultant d'un découpage des éléments binaires d'un code binaire pseudo-aléatoire à une cadence multiple et synchrone de ces éléments binaires est une meilleure utilisation des deux nouvelles bandes de fréquences $E_1$ et $E_2$, de faibles largeurs, allouées de part et d'autre de la bande de fréquence $L_1$ du système de navigation GPS pour le projet européen de nouveau système de navigation par satellites Galileo. Ces codes spéciaux d'étalement permettent en effet, tout en n'occupant que ces deux bandes $E_1$, $E_2$, d'avoir un débit de code d'étalement élevé correspondant à celui d'un code binaire pseudo-aléatoire occupant la totalité de la bande de fréquence qu'elles délimitent et, par conséquent, d'avoir la même précision de mesure que si le signal de transmission occupait non seulement les bandes $E_1$, $E_2$ mais également leur intervalle de séparation.

On se retrouve ainsi, dans différents projets de futurs systèmes de navigation par satellites, avec des systèmes de transmission à accès multiple à répartition par codes CDMA mettant en oeuvre des codes spéciaux d'étalement résultant d'un découpage des éléments binaires d'un code binaire pseudo-aléatoire à une cadence multiple et synchrone de ces éléments binaires. Ces codes spéciaux d'étalement sont compatibles avec les récepteurs de navigation prévus pour les codes d'étalement habituels de type binaire pseudo-aléatoire, par le fait que l'on peut leur appliquer les mêmes traitements pour les accrocher et les synchroniser, avec cependant quelques précautions pour tenir compte des fractionnements de leur pic d'autocorrélation. Ils n'entraînent donc pas, a priori, de modifications importantes dans les récepteurs.

La présente invention a pour but de profiter des propriétés particulières des codes d'étalement résultant d'un découpage des éléments binaires d'un code binaire pseudo-aléatoire à une cadence multiple et synchrone de ces éléments binaires, découpage dont l'effet s'apparente à celui d'une modulation à doubles bandes latérales dédoublant le spectre de fréquence des codes binaires pseudo-aléatoires initiaux, pour simplifier, dans certaines circonstances, la tâche des récepteurs de navigation. En effet, il peut être avantageux, de diminuer le nombre de calculs effectués par un récepteur de navigation par satellites, au prix d'une moindre précision de navigation, si la diminution du nombre de calculs ne se traduit que par une perte acceptable de précision, car la capacité de calcul est un paramètre important dans le coût d'un récepteur de navigation par satellites

La présente invention a pour objet un procédé de traitement d'un signal de transmission numérique à bande étalée obtenue au moyen d'un code d'étalement dit "résultant" provenant d'un découpage des éléments binaires d'un code binaire pseudo-aléatoire dit "initial", à une fréquence multiple et synchrone du débit du code binaire pseudo-aléatoire initial, ledit signal de transmission en bande étalée présentant, par suite du code d'étalement résultant utilisé, un spectre de fréquence dédoublé occupant deux bandes latérales situées aux extrémités d'un domaine de fréquence dont la largeur dépend de la fréquence du découpage, ce procédé de traitement étant remarquable en ce qu'il consiste à sélectionner par filtrage, dans le signal reçu, l'une ou l'autre des bandes latérales, et à désétaler le signal partiel correspondant à la bande latérale sélectionnée au moyen du code d'étalement binaire pseudo-aléatoire initial à l'origine du code d'étalement résultant effectivement utilisé.

En ne considérant que l'une ou l'autre des bandes latérales et non l'ensemble des deux bandes latérales et de l'intervalle des fréquences qui les sépare, on ne perd pas d'informations sur le contenu du signal transmis mais uniquement de la puissance. Cela permet de réduire la cadence de l'échantillonnage nécessaire à la prise en compte du signal reçu dans le rapport de la largeur du dit ensemble à celle de l'une des bandes latérales. Cette diminution de la cadence d'échantillonnage se traduit par une diminution du même ordre de la quantité de calculs nécessaire pour extraire du signal reçu une mesure du délai de transmission et donc la distance relative émetteur-récepteur. La contrepartie est une moindre sensibilité puisque la moitié de la puissance du signal reçu est perdue et une moindre précision de synchronisation entre le code d'émission et sa réplique en réception puisque l'on se base maintenant sur le code d'étalement binaire pseudo-aléatoire initial dont le débit est inférieur à celui du code d'étalement résultant, effectivement utilisé, dans le ratio des découpages subis par un élément de code d'étalement binaire pseudo-aléatoire, à l'origine du code d'étalement utilisé effectivement.

Comme les puissances émises par les satellites ont tendance à augmenter, la puissance du signal reçu est de moins en moins un problème. La diminution de précision est acceptable dans la plupart des cas d'utilisation grand public. Le procédé de traitement simplifié proposé peut être mis en oeuvre avec un récepteur de navigation par satellites moins performant en puissance de calcul donc moins coûteux, ce qui permet d'envisager un domaine d'application beaucoup plus large de la technique de navigation par satellites. Il peut aussi être mis en oeuvre en secours du procédé de traitement classique, dans le cas de conditions dégradées de réception où l'une des bandes latérales occupées par le signal d'un satellite se trouve particulièrement parasitée alors que ce n'est pas le cas pour l'autre, la constatation du parasitage excessif de l'une des bandes latérales pouvant se faire par une comparaison des énergies reçues dans chacune des bandes latérales, entre elles et par rapport au niveau de bruit thermique.

L'invention a également pour objet un dispositif de mise en oeuvre du procédé précité.

D'autres caractéristiques et avantages de l'invention ressortiront de la description ci-après d'un mode de réalisation donné à titre d'exemple. Cette description sera faite en regard du dessin dans lequel :

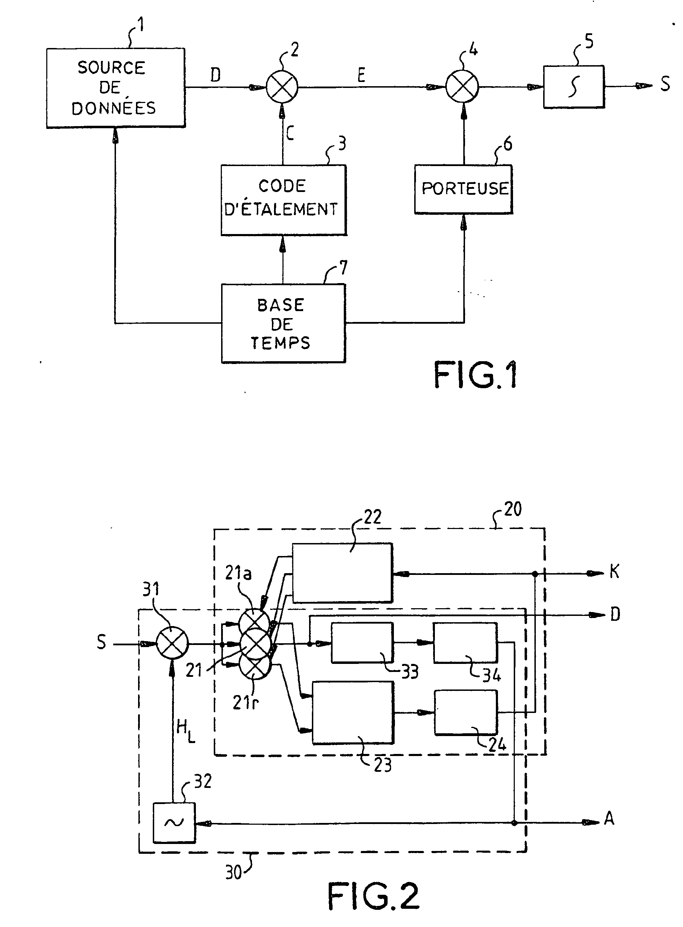

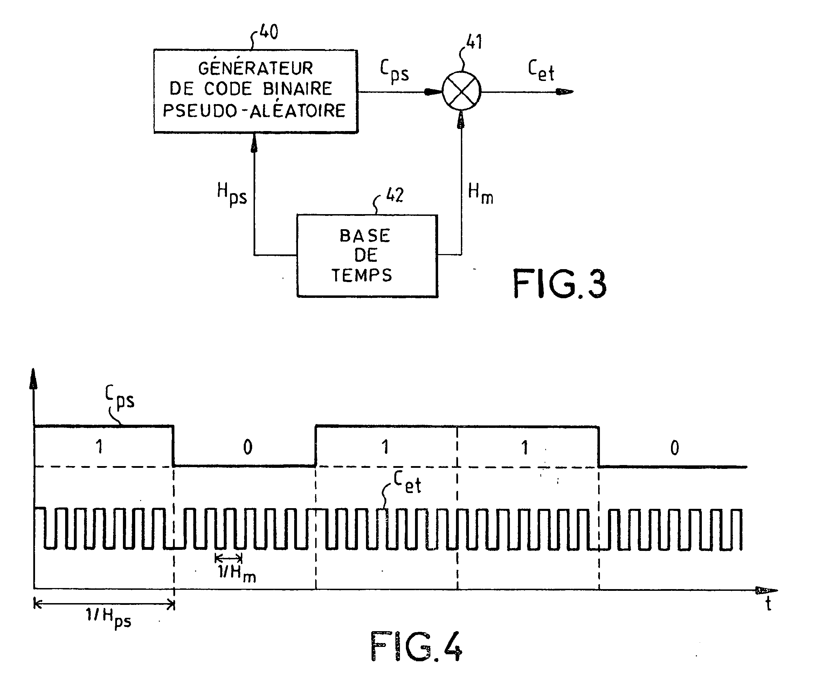

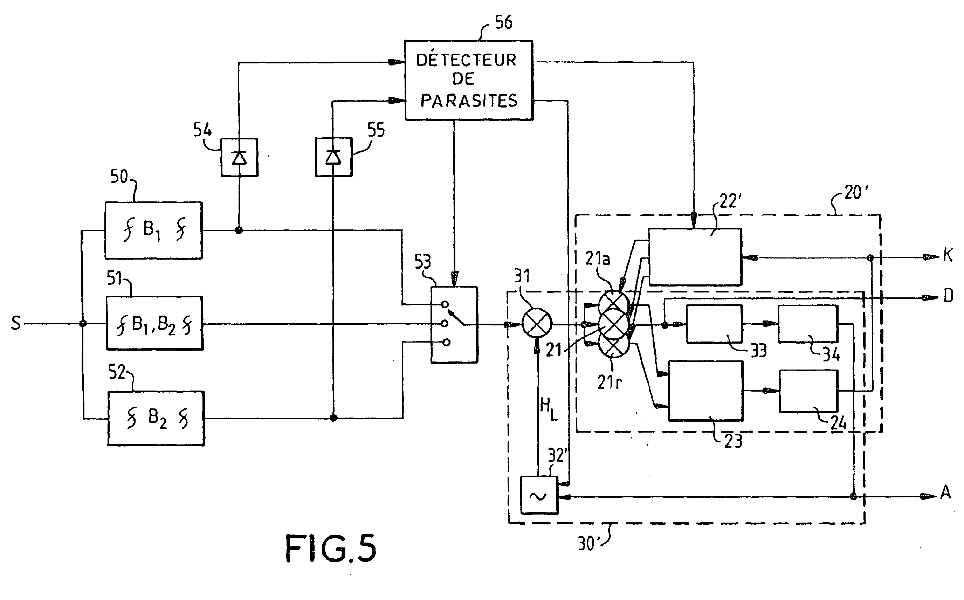

- une figure 1 est un schéma de principe d'un émetteur engendrant un signal de transmission de données à bande étalée selon la méthode DSSS,
- une figure 2 est un schéma de principe d'un étage de démodulation et de désétalement utilisable en réception d'un signal de transmission numérique à bande étalée selon la méthode DSSS,
- une figure 3 est un schéma de principe d'un générateur de code d'étalement à spectre de fréquence dédoublé avec un trou médian dans la bande de fréquence occupée,
- une figure 4 est un diagramme de courbes représentant une portion de code d'étalement binaire pseudo-aléatoire et une portion de code d'étalement à spectre de fréquence dédoublé obtenue par découpage des éléments binaire de la portion de code binaire pseudo-aléatoire, et
- une figure 5 est un schéma de principe des étages de filtrage, de démodulation et de désétalement d'un récepteur ayant deux modes de fonctionnement, un normal et l'autre dégradé, le mode de fonctionnement dégradé effectuant un traitement du signal reçu conforme à l'invention.

La façon habituelle pour engendrer un signal de transmission numérique à bande étalée, de type DSSS, consiste à partir de données à transmettre mises sous la forme d'une suite D d'éléments binaires de même durée se succédant à une cadence régulière $H_d$. Cette suite D d'éléments binaires, supposée sur la figure 1, provenant d'une source de données 1, est soumise à une première modulation réalisant l'étalement de spectre, symbolisée par un premier multiplieur 2. Ce premier multiplieur 2 effectue le produit de la suite binaire D de données avec un code d'étalement qui est une autre suite C d'éléments binaires de même durée se succédant à une cadence régulière $H_c$ et provenant d'un générateur 3 de code d'étalement. La cadence $H_c$ du code d'étalement est beaucoup plus rapide que celle $H_d$ de la suite des données. Par exemple, dans les signaux de navigation à bande étalée de type C/A du système GPS, le débit $H_c$ du code d'étalement est 20.460 fois plus rapide que celui $H_d$ des données. Le signal binaire E résultant de la première modulation d'étalement, qui est disponible en sortie du premier multiplieur 2, correspond à la suite C du code d'étalement inversée ou non au rythme, lent par rapport à son propre rythme, de la suite D des données. Il est ensuite soumis à une deuxième modulation réalisant la mise en forme de transmission, symbolisée par un deuxième multiplieur 4 et par un dispositif de filtrage 5. Cette deuxième modulation de transmission effectue le produit du signal étalé E avec une porteuse de transmission fournie par un générateur 6 de porteuse, produit qui, une fois filtré par le dispositif de filtrage 5, constitue le signal transmis S.

La deuxième modulation de transmission peut être de tout type connu. C'est très souvent une modulation à bande latérale unique. Pour faciliter le traitement de réception, les débits de la suite D de données et de la suite C du code d'étalement, ainsi que la porteuse de la modulation de transmission sont synchronisés et proviennent d'une base de temps 7 fournissant les différents signaux de cadencement nécessaires à la source de données 1, au générateur 3 de code d'étalement et au générateur 6 de porteuse à partir d'une horloge étalon unique.

Bien entendu, le schéma de la figure 1 est simplifié à l'extrême et ne préjuge pas de la réalisation précise d'un émetteur de signal de transmission de données de type DSSS qui peut prendre des formes assez diverses.

A la réception, pour accéder aux données contenues dans un signal de transmission numérique à bande étalée de type DSSS, il faut lui faire subir des traitements inverses des modulations de transmission et d'étalement de spectre appliquées à l'émission. Ces deux traitements inverses impliquent la génération, en réception, d'une réplique de la porteuse utilisée pour la modulation de transmission et d'une réplique du code utilisé pour la modulation d'étalement qui soient synchronisées sur les versions des mêmes signaux implicitement contenues dans le signal reçu.

De façon habituelle, ces deux traitements inverses sont effectués en réception, dans un étage de démodulation et de désétalement comportant, comme représenté à la figure 2, une boucle de récupération de code 20 imbriquée dans une boucle de récupération de porteuse 30. Le signal de transmission numérique à bande étalée S parvient en entrée de cet étage de démodulation et de désétalement après avoir été translaté dans une bande de fréquence intermédiaire plus ou moins proche de la bande de base. Là il est tout d'abord soumis à un détecteur synchrone 31 opérant à l'aide d'une porteuse locale $H_L$ délivrée par un générateur de porteuse locale 32 faisant partie de la boucle de récupération de porteuse 30. En sortie du détecteur synchrone 31 le signal reçu replacé en bande de base est désétalé par un corrélateur 21 avec un code d'étalement engendré localement par un générateur de code d'étalement faisant parti de la boucle de récupération de code 20.

La boucle de récupération de code d'étalement 20 est une boucle classique à fenêtre de corrélation. Elle tire son signal d'asservissement de la comparaison des valeurs de corrélation du signal reçu et démodulé avec deux versions locales du code d'étalement décalées d'un délai constant, l'une A en avance, l'autre R en retard sur une troisième P version du code d'étalement dite en phase utilisée effectivement pour le désétalement du signal. Elle recherche la position dans le temps de ces versions en avance A et en retard R du code d'étalement local conduisant à des corrélations de valeurs identiques avec le signal à désétaler. Son principe est basé sur la forme triangulaire du lobe principal de la loi d'autocorrélation d'un code d'étalement binaire de type pseudo-aléatoire et sur l'absence de lobes secondaires significatifs de cette loi. Lorsque les délais d'avance et de retard des versions A en avance et R en retard du code d'étalement sont choisis inférieurs à la demi-largeur de la base du lobe principal triangulaire de la loi d'autocorrélation du code d'étalement, la recherche de valeurs identiques de corrélation pour les versions en avance et en retard du code local d'étalement permet d'encadrer le maximum et de faire coïncider la version en phase P du code local d'étalement avec le code du signal à désétaler.

A cette fin, la boucle de récupération de code d'étalement 20 comporte trois corrélateurs en parallèle, $21_A$, 21, $21_R$, un générateur de code d'étalement 22 fournissant trois versions du code d'étalement décalées entre elles du délai voulu, un comparateur 23 connecté en sortie des corrélateurs $21_A$ et $21_R$ affectés aux versions en avance A et en retard R du code local d'étalement et un filtre de boucle 24 fournissant un signal d'asservissement pour agir sur le rythme du générateur local de code d'étalement 22 afin de parvenir à faire coïncider la version P du code local d'étalement avec celui du signal à désétaler.

Cette boucle de récupération de code d'étalement à fenêtre de corrélation, qui opère à partir d'un critère d'erreur basé sur des considérations énergétiques est peu sensible aux erreurs de phase affectant la porteuse locale de démodulation.

Comme le signal reçu ne comporte pas, dans le cas général, de raie de puissance à la fréquence de la porteuse de modulation de transmission, la boucle de récupération de porteuse 30 tire son signal d'asservissement du signal désétalé issu du corrélateur $21_P$ opérant sur la version en phase du code local d'étalement, au moyen d'un circuit 33 d'extraction d'une raie harmonique de la porteuse utilisant par exemple la technique de Costas. Comme à l'habitude, un filtre de boucle 34 est intercalé entre la commande de phase de l'oscillateur de porteuse locale 32 et le circuit d'extraction de raie harmonique 33.

En sortie de l'étage de démodulation, trois signaux sont disponibles :

- la suite des données D provenant du corrélateur 21,
- le signal d'asservissement K provenant du comparateur 23 par l'intermédiaire du filtre de boucle 24 et agissant sur le rythme du générateur local 22 de code d'étalement. Ce signal B fournit une mesure du retard en réception du code d'étalement du signal traité par rapport à la version de code d'étalement utilisée à l'émission dont la phase est déduite de la connaissance de l'horloge étalon utilisée à l'émission, qui est une information fournie par les données transmises, et donne une indication du temps mis par le signal pour franchir la distance satellite-récepteur, et
- le signal d'asservissement A provenant du circuit d'extraction de raie 33 par l'intermédiaire du filtre de boucle 34, qui fournit une mesure de l'effet doppler affectant en réception la porteuse de transmission.

Un code binaire pseudo-aléatoire présente un spectre de puissance $S(\omega)$ ayant la forme d'un sinus cardinal au carré ayant pour variable la pulsation pondérée par la demi période d'un élément binaire :

$$S(\omega) = A^2 T_c \sin c^2 \frac{\omega T_c}{2}$$

A étant l'amplitude séparant un état binaire 0 d'un état binaire 1,
$T_c$ la période d'un élément binaire, et
$\omega$ la pulsation : $\omega = 2\pi f$.

Ce spectre de puissance a un lobe principal ayant une largeur de l'ordre du double du débit $H_c$ du code binaire pseudo-aléatoire. Il est habituel de conserver une partie des lobes latéraux, ce qui conduit à lui attribuer une largeur minimale de bande de fréquence légèrement supérieure au double du débit $H_c$. Lorsqu'il est modulé par une suite de données de débit $H_d$ inférieur et synchrone, le spectre de puissance d'un code binaire pseudo-aléatoire ne subit pas de modification, de sorte que le signal de données à bande étalée résultant continue d'occuper la même bande de fréquence que le code d'étalement binaire pseudo-aléatoire ayant servi à l'étaler. La modulation de transmission, lorsqu'elle est de type à bande latérale unique ne fait que translater ce spectre dans une bande de fréquence affectée à la propagation des signaux.

Comme indiqué précédemment, il est des cas, où la bande attribuée pour la propagation du signal se présente en deux parties distinctes. Un exemple en est l'attribution au système de navigation par satellites GALILEO, dans le haut de la bande L, de deux étroites bandes de fréquence de quatre MHz de large: $E_1$ (1559-1563 MHz) et $E_2$ (1587-1591 MHZ) de part et d'autre de la bande $L_1$ de 24 MHz de large (1563-1587 MHz) du système GPS. Chacune de ces deux bandes $E_1$, $E_2$, lorsqu'elles sont utilisées individuellement, n'autorise, si l'on veut respecter la règle usuelle d'une largeur de bande transmise un peu supérieure à deux fois le débit, que l'utilisation d'un code d'étalement binaire pseudo-aléatoire d'un débit de l'ordre de 2 MHz ne permettant pas d'atteindre la précision de navigation désirée en aéronautique civile. Pour contourner cette limitation, il est nécessaire d'envisager une utilisation conjointe de ces deux bandes et donc d'employer un code d'étalement qui n'est plus binaire pseudo-aléatoire et qui occupe une bande de fréquence en deux parties de 4 MHz de large, séparées d'un intervalle libre de 24 MHz. En effet, un tel code d'étalement aura alors un débit pouvant atteindre 14MHz autorisant une amélioration de la précision de navigation dans un rapport 7.

Un autre exemple est celui du code M dans le futur système de navigation par satellites GPS, où l'on recherche un trou dans le milieu de la bande de fréquence occupée pour laisser la place au code d'étalement C/A afin de pouvoir le brouiller librement.

Pour concevoir de nouveaux codes d'étalement respectant cette contrainte d'occuper une bande de fréquence en deux parties séparées par un intervalle libre, on cherche, la plupart du temps, à partir d'un code d'étalement binaire pseudo-aléatoire dont les propriétés d'acquisition et de poursuite en réception sont bien connues et à appliquer à ce code d'étalement binaire pseudo-aléatoire un traitement permettant le modelage voulu de la bande de fréquence occupée en dégradant le moins possible ses propriétés de poursuite et d'acquisition en réception. Dans ce cadre, la quasi-totalité des méthodes proposées consiste à remplacer chaque élément binaire du code d'étalement initial par une forme d'onde binaire, sans composante continue, obtenue par un découpage régulier ou non de chaque élément binaire à une fréquence multiple et synchrone de leur débit. Cette opération de découpage s'apparente à une modulation auxiliaire de type à doubles bandes latérales sans porteuse. Le code d'étalement obtenu voit le lobe principal de sa fonction d'autocorrélation fractionné en plusieurs parties, ce qui complique son acquisition en réception, sans pour autant l'empêcher.

Une manière de réaliser ce remplacement d'un élément binaire par une forme d'onde sans composante continue consiste à effectuer un découpage régulier de chaque élément binaire du code binaire pseudo-aléatoire initial, cela à une fréquence multiple et synchrone du débit du code binaire pseudo-aléatoire. Ce découpage des éléments binaires du code pseudo-aléatoire initial provoque un dédoublement du spectre de fréquence du code binaire pseudo-aléatoire et un éloignement en fréquence des deux répliques obtenues, sur une distance correspondant à la fréquence du découpage.

La figure 3 donne un exemple de schéma de générateur de code d'étalement réalisant cette opération. On y distingue un générateur 40 délivrant un code binaire pseudo-aléatoire $C_{ps}$ à une cadence $H_{ps}$ suffisamment basse pour que son spectre de puissance tienne dans la largeur d'une des deux parties autorisées de la bande que l'on désire occuper. Ce code binaire pseudo-aléatoire $C_{ps}$ est soumis à une modulation auxiliaire de type à doubles bandes latérales sans porteuse, qui est symbolisée par un multiplieur 41. Celle-ci consiste en un découpage régulier des éléments binaires du code pseudo-aléatoire $C_{ps}$ obtenu en effectuant le produit de ce code pseudo-aléatoire $C_{ps}$ fourni par le générateur 40, par une porteuse binaire $H_m$ constituée d'un multiple synchrone de la cadence $H_{ps}$ du code binaire pseudo-aléatoire $C_{ps}$. La cadence $H_{ps}$ du code binaire pseudo-aléatoire $C_{ps}$ et la porteuse de modulation $H_m$ sont fournies par une même base de temps 42. Le multiplieur 41 délivre en sortie un nouveau code binaire $C_{et}$ qui est utilisé en tant que code d'étalement en lieu et place du code binaire pseudo-aléatoire initial $C_{ps}$.

Pour l'utilisation conjointe des bandes E1 et E2 attribuées au système de navigation par satellites Galileo, le code binaire pseudo-aléatoire initial peut avoir un débit de 2,046 MHZ tenant dans la largeur de bande de 4 MHz affectée à chacune des bandes E1, E2 tandis que la porteuse de la modulation auxiliaire peut être une porteuse binaire ayant une fréquence de 14,322 MHz correspondant au multiple d'ordre 7 du débit du code binaire pseudo-aléatoire initial.

La figure 4 est un diagramme de courbes illustrant les transformations apportées au code d'étalement binaire pseudo-aléatoire par le découpage de ses éléments binaires. La première courbe représente un segment du code binaire pseudo-aléatoire $C_{ps}$ formé de la suite binaire 10110 dont les éléments s'étendent chacun sur une période $1/H_{ps}$. La deuxième courbe représente le code d'étalement Cet résultant d'un découpage de chaque élément binaire du code pseudo-aléatoire $C_{ps}$ à une cadence $H_m$ sept fois supérieure au débit $H_{ps}$ de ce code. Ce découpage hache chaque élément binaire du code pseudo-aléatoire $C_{ps}$ en quatorze parties, ce qui fait que le code d'étalement résultant a un débit quatorze fois plus rapide.

Le nouveau code d'étalement obtenu ayant un débit nettement plus rapide, permet une synchronisation en réception plus précise avec, pour conséquence, au niveau d'un récepteur de positionnement par satellites, une forte augmentation de la précision des mesures de temps de transit des signaux reçus se traduisant en final, par une nette amélioration de la précision du positionnement.

Ces nouveaux codes d'étalement, qui ne conservent les propriétés des codes binaires pseudo-aléatoires d'origine qu'au niveau de chacune des bandes latérales qu'ils occupent, sont traités, en réception, de façon très proche des codes d'étalement binaires pseudo-aléatoires classiques. Ils sont filtrés pour ne conserver que la bande utile comprenant leurs deux bandes latérales et le domaine de fréquence qui les sépare puis appliqués à une boucle de récupération de code à fenêtre de corrélation qui comporte un générateur local de code engendrant leurs répliques de la même façon que pour les codes binaires pseudo-aléatoires et recevant un signal d'asservissement permettant de les faire glisser par rapport au signal reçu jusqu'à l'obtention du synchronisme. Le signal d'asservissement est seulement un peu plus élaboré pour tenir compte du fractionnement du lobe principal de leur fonction d'autocorrélation consécutif à l'opération de découpage.

On propose de simplifier, en réception, le traitement de désétalement des signaux de transmission de données en bande étalée employant ces nouveaux types de code en prenant en considération le fait qu'ils tirent leurs origines de codes binaires pseudo-aléatoires. Plus précisément, on propose de filtrer le signal de transmission de données reçu pour ne conserver que l'une des bandes latérales occupées et de soumettre le résultat du filtrage à une boucle de récupération de code employant des répliques des codes binaires pseudo-aléatoires à la base de ces nouveaux codes. Le filtrage d'un signal de transmission en bande étalée au moyen de ces nouveaux types de codes, sur une plage réduite à l'une des bandes latérales qu'ils occupent, réalise sur le signal, une intégration qui fait disparaître la modulation de découpage, de sorte que la composante filtrée du signal de transmission paraît être étalée, non pas avec le nouveau code d'étalement utilisé mais avec le code binaire pseudo-aléatoire sous-jacent. Cela justifie alors le fait de soumettre cette composante filtrée à un traitement de désétalement au moyen d'une boucle de récupération de code employant des répliques du code binaire pseudo-aléatoire sous-jacent.

L'intérêt de ce traitement simplifié de désétalement est une diminution du nombre des calculs nécessaires puisque la composante filtrée occupe une bande de fréquence beaucoup plus étroite que le signal de transmission lui-même et peut de ce fait être sous-échantillonnée dans le rapport des largeurs de ces bandes. Dans l'exemple donné précédemment relativement au projet de système de navigation par satellites Galileo, ce sous-échantillonnage atteint un rapport de quatorze, ce qui est assez considérable. Il peut donc être conduit avec des processeurs de traitement numérique de signaux beaucoup moins performants donc plus simples à produire, moins coûteux et voués à une plus large diffusion. Un autre intérêt est un accrochage plus facile de la réplique du code engendrée localement en réception qui présente une fonction d'autocorrélation avec un lobe principal non fragmenté.

La contrepartie de ce traitement simplifié est une moindre précision due au fait que le traitement de désétalement s'effectue sur la base d'un code d'étalement ayant un débit inférieur dans le même rapport que le sous-échantillonnage et une moindre sensibilité puisque la moitié de la puissance du signal reçu est alors négligée.

Ce traitement simplifié de désétalement peut être utilisé en secours du traitement normal, lorsque l'une des bandes latérales occupées par le signal transmis est parasitée au point que sa prise en compte fasse décrocher les boucles de récupération de porteuse et de code du récepteur. Il suffit pour cela, de tester la puissance reçue au niveau du récepteur dans chacune des bandes latérales occupées par le signal transmis et d'éliminer une bande latérale et le domaine de fréquence entre les deux bandes latérales lorsque la puissance reçue par l'intermédiaire de cette bande latérale dépasse un certain seuil témoignant de la présence en son sein de parasites gênants. Ainsi, au lieu d'avoir un récepteur aveuglé et incapable de fonctionner, on récupère un fonctionnement dégradé moins précis mais encore très utile.

La figure 5 est un schéma de principe des étages de filtrage, de démodulation et de désétalement d'un récepteur ayant deux modes de fonctionnement, un normal et l'autre dégradé, avec un automatisme permettant de passer automatiquement de l'un à l'autre en fonction des conditions de réception.

On distingue en entrée une batterie de trois filtres de bande 50, 51, 52 mis en parallèle, destinés à limiter la bande du signal d'entrée S de trois manières différentes. Le signal d'entrée S est placé dans une bande de fréquence intermédiaire plus ou moins proche de la bande de base par des étages amonts non représentés du récepteur. Une fois filtré, il doit être démodulé pour être remis en bande de base et désétalé par un étage de démodulation et de désétalement constitué d'une boucle de récupération de code 20' imbriquée dans une boucle de récupération de porteuse 30' selon le même principe que celui représenté à la figure 2. Les trois filtres de bande 50, 51, 52 proposent trois versions possibles dont l'une est choisie pour être appliquée à l'entrée de l'étage de démodulation et de désétalement.

Le signal d'entrée S, supposé étalé en fréquence à l'aide d'un code binaire d'étalement obtenu par découpage des éléments binaires d'un code binaire pseudo-aléatoire, présente un spectre à doubles bandes latérales $B_1$, $B_2$ et occupe un domaine de fréquence borné par ses deux bandes latérales $B_1$, $B_2$.

Le premier filtre de bande 50 ne conserve que la bande latérale inférieure $B_1$ du signal d'entrée S. Le deuxième filtre de bande 51 conserve l'intégralité du domaine de fréquence borné par les deux bandes latérales $B_1$, $B_2$ du signal d'entrée S. Le troisième filtre de bande 52 ne conserve que la bande latérale supérieure $B_2$ du signal d'entrée S. Les signaux de sortie des trois filtres de bande 50, 51, 52 sont appliqués aux entrées d'un sélecteur 53 intercalé devant l'étage de démodulation et de désétalement. Ceux des deux filtres de bandes latérales 50, 52 sont également appliqués à des détecteurs individuels de puissance 54, 55.

Les sorties des détecteurs de puissance 54, 55 sont raccordées à un détecteur de parasites 56 qui contrôle le sélecteur 53 ainsi que le type de code de désétalement utilisé par le générateur local de code 22' de la boucle de récupération de code 20' de l'étage de démodulation et de désétalement, et la fréquence de réglage du générateur local 32' de la boucle de récupération de porteuse 30' de l'étage de démodulation et de désétalement.

Le détecteur de parasites 56 compare les puissances de signal reçu dans les deux bandes latérales $B_1$ et $B_2$ à un seuil.

Si le seuil n'est pas atteint, il commande au sélecteur de choisir le signal de sortie du filtre de bande 51 et donne pour consignes au générateur de code local 22', d'engendrer des répliques du code binaire d'étalement à doubles bandes latérales effectivement utilisé, et au générateur de porteuse locale 32' d'adopter, comme fréquence de réglage de base, la fréquence centrale de la bande délimitée dans le signal d'entrée S par les deux bandes latérales $B_1$ et $B_2$.

Si le seuil est franchi par le signal reçu dans l'une des bandes latérales inférieure $B_1$ ou supérieure $B_2$, le détecteur de parasite met cette bande latérale hors circuit en commandant au sélecteur 53 de choisir le signal de sortie du filtre de bande 50 ou 52 centré sur l'autre bande latérale. Simultanément, il donne pour consignes au générateur de code local 22' d'engendrer des répliques du code binaire pseudo-aléatoire sous-jacent au code d'étalement effectivement utilisé, et au générateur de porteuse locale 32' d'adopter, comme fréquence de réglage de base, la fréquence centrale de la bande latérale conservée.

Le schéma de principe de la figure 5 fait appel, pour faciliter la compréhension, à un assemblage de boîtes réalisant différentes fonctions. Dans la pratique, le signal reçu est numérisé en fréquence intermédiaire, avant son filtrage de limitation de bande, sa détection par le démodulateur synchrone et son désétalement par corrélation qui sont réalisés par des traitements numériques au moyen d'un ou plusieurs processeurs de signal pilotés par des logiciels, effectuant différentes tâches correspondant aux différentes fonctions évoquées, en parallèle ou en temps partagé, selon un ordre adapté aux techniques numériques mises en oeuvre..

## Revendications

**1.** Procédé de traitement d'un signal de transmission numérique à bande étalée obtenue au moyen d'un code d'étalement dit "résultant" provenant d'un découpage des éléments binaires d'un code binaire pseudo-aléatoire dit "initial", à une fréquence multiple et synchrone du débit du code binaire pseudo-aléatoire initial, ledit signal de transmission en bande étalée présentant, par suite du code d'étalement résultant utilisé, un spectre de fréquence dédoublé occupant deux bandes latérales ($B_1$, $B_2$) situées aux extrémités d'un domaine de fréquence dont la largeur dépend de la fréquence du découpage, ce procédé de traitement étant **caractérisé en ce qu'**il consiste à sélectionner par filtrage, dans le signal de transmission numérique reçu, l'une ($B_1$) ou l'autre ($B_2$) des bandes latérales, et à désétaler le signal partiel correspondant à la bande latérale sélectionnée ($B_1$ ou $B_2$) au moyen du code binaire pseudo-aléatoire initial à l'origine du code d'étalement résultant effectivement utilisé.

**2.** Procédé selon la revendication 1, appliqué au traitement d'un signal de transmission numérique à bande étalée obtenue au moyen d'un code d'étalement dit "résultant" provenant d'un découpage des éléments binaires d'un code binaire pseudo-aléatoire dit "initial", à une fréquence multiple et synchrone du débit du code binaire pseudo-aléatoire initial, ledit signal de transmission en bande étalée présentant, par suite du code d'étalement résultant utilisé, un spectre de fréquence dédoublé occupant deux bandes latérales ($B_1$, $B_2$) situées aux extrémités d'un domaine de fréquence dont la largeur dépend de la fréquence du découpage, ce procédé de traitement étant **caractérisé en ce qu'**il consiste à :

    • mesurer les puissances reçues dans chacune des deux bandes latérales ($B_1$, $B_2$) occupées par le signal de transmission numérique,
    • comparer les deux mesures de puissances obtenues avec au moins un seuil de puissance admissible, et
    • en fonction du résultat de ces comparaisons :

        soit, si les mesures des puissances reçues dans les bandes latérales ($B_1$, $B_2$) restent inférieures au seuil de puissance admissible, sélectionner par filtrage la bande spectrale complète du signal de transmission numérique constituée des deux bandes latérales ($B_1$, $B_2$) et du domaine de fréquence qui les sépare et désétaler le signal reçu occupant la bande spectrale complète au moyen du code d'étalement résultant,
        soit, si une mesure de la puissance reçue dans une bande latérale ($B_1$ ou $B_2$) dépasse le seuil de puissance admissible, sélectionner par filtrage l'autre bande latérale ($B_1$ ou $B_2$) et désétaler le signal partiel correspondant à la bande latérale sélectionnée ($B_2$ ou $B_1$) au moyen du code binaire pseudo-aléatoire initial à l'origine du code d'étalement résultant effectivement utilisé.

**3.** Dispositif de traitement en réception, d'un signal de transmission numérique à bande étalée obtenue au moyen d'un code d'étalement dit "résultant" provenant d'un découpage des éléments binaires d'un code binaire pseudo-aléatoire dit "initial", à une fréquence multiple et synchrone du débit du code binaire pseudo-aléatoire initial, ledit signal de transmission en bande étalée présentant, par suite du code d'étalement résultant utilisé, un spectre de fréquence dédoublé occupant deux bandes latérales ($B_1$, $B_2$) situées aux extrémités d'un domaine de fréquence dont la largeur dépend de la fréquence du découpage, ce dispositif étant **caractérisé en ce qu'**il comporte :

• des moyens de filtrage (50, 51, 52) permettant d'isoler la bande spectrale complète du signal de transmission numérique constituée des deux bandes latérales ($B_1$, $B_2$) et du domaine de fréquence qui les sépare, et chacune des bandes latérales ($B_1$ $B_2$),

• des moyens de démodulation et de désétalement (20', 30') équipés d'un générateur de porteuse locale (32') pouvant prendre pour fréquence de réglage de base, la fréquence centrale de la bande spectrale complète occupée par le signal de transmission numérique où l'une des fréquences centrales de ses bandes latérales ($B_1$, $B_2$), et d'un générateur local de code (22') pouvant engendrer des répliques du code d'étalement résultant ou du code binaire pseudo-aléatoire initial,

• un sélecteur (53) intercalé entre les moyens de filtrage (50, 51, 52) et les moyens de démodulation et de désétalement (20', 30'), permettant d'appliquer aux moyens de démodulation et de désétalement (20', 30') le signal reçu dans la bande spectrale complète occupée par le signal de transmission numérique ou l'un des signaux reçus dans les bandes latérales ($B_1$, $B_2$) du signal de transmission numérique,

• des moyens (54, 55) de mesure des puissances reçues dans les deux bandes latérales ($B_1$, $B_2$) du signal de transmission numérique opérant à la suite des moyens de filtrage (50, 51, 52),

• des moyens (56) de détection de parasites recevant les mesures provenant des moyens de mesure de puissance (54, 55), les comparant à un seuil et utilisant les résultats de ces comparaisons pour commander le sélecteur (53) et fournir une consigne de fréquence de réglage de base pour le générateur de porteuse locale (32') et une consigne de code pour le générateur local de code (22').

**4.** Dispositif selon la revendication 3, **caractérisé en ce que** les moyens (56) de détection de parasite renferment une logique qui :

• lorsque les mesures fournies par les moyens (54, 55) de mesures des puissances reçues restent inférieures au seuil, donne pour consigne au sélecteur (53), de choisir le signal issu des moyens de filtrage (51) correspondant à la bande spectrale complète du signal de transmission numérique, pour consigne au générateur (32') de porteuse locale, d'adopter pour fréquence de réglage de base la fréquence centrale de la bande spectrale complète du signal de transmission numérique et pour consigne au générateur local (22') de code, d'engendrer des répliques du code d'étalement résultant, et

• lorsque l'une des mesures fournies par les moyens (54, 55) de mesures des puissances reçues franchit le seuil, donne pour consigne au sélecteur (53), de choisir le signal issu des moyens de filtrage (50 ou 52) correspondant à la bande latérale ($B_1$ ou $B_2$) qui n'est pas concernée par le franchissement du seuil, pour consigne au générateur (32') de porteuse locale, d'adopter pour fréquence de réglage de base la fréquence centrale de cette bande latérale non concernée ($B_1$ ou $B_2$), et pour consigne au générateur local (22') de code, d'engendrer des répliques du code binaire pseudo-aléatoire initial.

## Claims

**1.** Method of processing a spread-bandwidth digital transmission signal obtained by means of a so-called "resultant" spreading code originating from a chopping of the bits of a so-called "initial" pseudo-random binary code, at a frequency that is a multiple of and synchronous with the bit rate of the initial pseudo-random binary code, said spread-bandwidth transmission signal presenting, as a result of the resultant spreading code used, a split frequency spectrum occupying two sidebands ($B_1$, $B_2$) located at the edges of a frequency domain, the width of which depends on the chopping frequency, this processing method being **characterized in that** it consists in selecting, by filtering, in the received digital transmission signal, one ($B_1$) or the other ($B_2$) of the sidebands, and in unspreading the partial signal corresponding to the selected sideband ($B_1$ or $B_2$) by means of the initial pseudo-random binary code from which the resultant spreading code actually used results.

**2.** Method according to Claim 1, applied to the processing of a spread-bandwidth digital transmission signal obtained by means of a so-called "resultant" spreading code originating from a chopping of the bits of a so-called "initial" pseudo-random binary code, at a frequency that is a multiple of and synchronous with the bit rate of the initial pseudo-random binary code, said spread-bandwidth transmission signal presenting, as a result of the resultant spreading code used, a split frequency spectrum occupying two sidebands ($B_1$, $B_2$) located at the ends of a frequency domain, the width of which depends on the chopping frequency, this processing method being **characterized in**

**that** it consists in:

• measuring the received powers in each of the two sidebands ($B_1$, $B_2$) occupied by the digital transmission signal,
• comparing the two power measurements obtained with at least one acceptable power threshold, and
• according to the result of these comparisons:

either, if the measurements of the received powers in the sidebands ($B_1$, $B_2$) remain less than the acceptable power threshold, selecting by filtering the complete spectral band of the digital transmission signal consisting of the two sidebands ($B_1$, $B_2$) and of the frequency domain which separates them and unspreading the received signal occupying the complete spectral band by means of the resultant spreading code,
or, if a measurement of the received power in a sideband ($B_1$ or $B_2$) exceeds the acceptable power threshold, selecting by filtering the other sideband ($B_1$, $B_2$) and unspreading the partial signal corresponding to the selected sideband ($B_2$ or $B_1$) by means of the initial pseudo-random binary code from which the resultant spreading code actually used results.

3.  Device for processing, upon reception, a spread-bandwidth digital transmission signal obtained by means of a so-called "resultant" spreading code originating from a chopping of the bits of a so-called "initial" pseudo-random binary code, at a frequency that is a multiple of and synchronous with the bit rate of the initial pseudo-random binary code, said spread-bandwidth transmission signal presenting, as a result of the resultant spreading code used, a split frequency spectrum occupying two sidebands ($B_1$, $B_2$) located at the edges of a frequency domain, the width of which depends on the chopping frequency, this device being **characterized in that** it comprises:

• filtering means (50, 51, 52) making it possible to isolate the complete spectral band of the digital transmission signal consisting of the two sidebands ($B_1$, $B_2$) and the frequency domain that separates them, and each of the sidebands ($B_1$, $B_2$),
• demodulation and unspreading means (20', 30') equipped with a local carrier generator (32') that can take, for its base setting frequency, the central frequency of the complete spectral band occupied by the digital transmission signal or one of the central frequencies of its sidebands ($B_1$, $B_2$), and a local code generator (22') that can generate copies of the resultant spreading code or of the initial pseudo-random binary code,
• a selector (53) inserted between the filtering means (50, 51, 52) and the demodulation and unspreading means (20', 30'), making it possible to apply to the demodulation and unspreading means (20', 30') the signal received in the complete spectral band occupied by the digital transmission signal or one of the signals received in the sidebands ($B_1$, $B_2$) of the digital transmission signal,
• means (54, 55) of measuring the received powers in the two sidebands ($B_1$, $B_2$) of the digital transmission signal operating after the filtering means (50, 51, 52),
• noise detection means (56) receiving the measurements originating from the power measurement means (54, 55), comparing them with a threshold and using the results of these comparisons to control the selector (53) and supply a base setting frequency instruction for the local carrier generator (32') and a code instruction for the local code generator (22').

4.  Device according to Claim 3, **characterized in that** the noise detection means (56) contain a logic function which:

• when the measurements supplied by the means (54, 55) of measuring received powers remain less than the threshold, instructs the selector (53) to choose the signal obtained from the filtering means (51) corresponding to the complete spectral band of the digital transmission signal, instructs the local carrier generator (32') to adopt for its base setting frequency the central frequency of the complete spectral band of the digital transmission signal and instructs the local code generator (22') to generate copies of the resultant spreading code, and
• when one of the measurements supplied by the means (54, 55) of measuring received powers crosses the threshold, instructs the selector (53) to choose the signal obtained from the filtering means (50 or 52) corresponding to the sideband ($B_1$ or $B_2$) which is not involved in crossing the threshold, instructs the local carrier generator (32') to adopt for its base setting frequency the central frequency of this uninvolved sideband ($B_1$ or $B_2$), and instructs the local code generator (22') to generate copies of the initial pseudo-random binary code.

**Patentansprüche**

1.  Verfahren zur Verarbeitung eines digitalen Übertragungssignals mit Spreizband, welches mittels eines "resultierenden" Spreizungscodes erhalten wird, der von einem Zerhacken der Binärelemente eines "anfänglichen" pseudozufälligen Binärcodes mit einer Frequenz stammt, die ein Vielfaches der und synchron zur Geschwindigkeit des anfänglichen pseudozufälligen Binärcodes ist, wobei das Spreizband-Übertragungssignal aufgrund des verwendeten resultierenden Spreizungscodes ein halbiertes Frequenzspektrum aufweist, das zwei Seitenbänder $(B_1, B_2)$ einnimmt, die sich an den Enden eines Frequenzbereichs befinden, dessen Breite von der Frequenz des Zerhackens abhängt, wobei dieses Verarbeitungsverfahren **dadurch gekennzeichnet ist, dass** es darin besteht, durch Filterung in dem empfangenen digitalen Übertragungssignal das eine $(B_1)$ oder das andere $(B_2)$ der Seitenbänder auszuwählen, und das dem ausgewählten Seitenband $(B_1$ oder $B_2)$ entsprechende Teilsignal mittels des anfänglichen pseudozufälligen Binärcodes zu entspreizen, der die Ursache des tatsächlich verwendeten resultierenden Spreizungscodes ist.

2. Verfahren nach Anspruch 1, angewendet an die Verarbeitung eines digitalen Übertragungssignals mit Spreizband, welches mittels eines "resultierenden" Spreizungscodes erhalten wird, der von einem Zerhacken der Binärelemente eines "anfänglichen" pseudozufälligen Binärcodes mit einer Frequenz stammt, die ein Vielfaches der und synchron zur Geschwindigkeit des anfänglichen pseudozufälligen Binärcodes ist, wobei das Spreizband-Übertragungssignal aufgrund des verwendeten resultierenden Spreizungscodes ein halbiertes Frequenzspektrum aufweist, das zwei Seitenbänder $(B_1, B_2)$ einnimmt, die sich an den Enden eines Frequenzbereichs befinden, dessen Breite von der Frequenz des Zerhackens abhängt, wobei dieses Verarbeitungsverfahren **dadurch gekennzeichnet ist, dass** es darin besteht:

> • die Leistungen zu messen, die in jedem der zwei Seitenbänder $(B_1, B_2)$ empfangen werden, die von dem digitalen Übertragungssignal eingenommen werden,
> • die zwei erhaltenen Leistungsmesswerte mit mindestens einem zulässigen Leistungsschwellwert zu vergleichen, und
> • in Abhängigkeit vom Ergebnis dieser Vergleiche:

>> entweder, wenn die Messwerte der in den Seitenbändern $(B_1, B_2)$ empfangenen Leistungen unter dem zulässigen Leistungsschwellwert bleiben, durch Filterung das vollständige Spektralband des digitalen Übertragungssignals auszuwählen, das aus den zwei Seitenbändern $(B_1, B_2)$ und dem sie trennenden Frequenzbereich besteht, und das empfangene Signal, das das vollständige Spektralband einnimmt, mittels des resultierenden Spreizungscodes zu entspreizen,

>> oder, wenn ein Messwert der in einem Seitenband $(B_1$ oder $B_2)$ empfangenen Leistung den zulässigen Leistungsschwellwert überschreitet, durch Filterung das andere Seitenband $(B_1$ oder $B_2)$ auszuwählen und das Teilsignal, das dem ausgewählten Seitenband $(B_2$ oder $B_1)$ entspricht, mittels des anfänglichen pseudozufälligen Binärcodes zu entspreizen, der die Ursache des tatsächlich verwendeten resultierenden Spreizungscodes ist.

3. Vorrichtung zur Verarbeitung auf der Empfangsseite eines digitalen Übertragungssignals mit Spreizband, welches mittels eines "resultierenden" Spreizungscodes erhalten wird, der von einem Zerhacken der Binärelemente eines "anfänglichen" pseudozufälligen Binärcodes mit einer Frequenz stammt, die ein Vielfaches der und synchron zur Geschwindigkeit des anfänglichen pseudozufälligen Binärcodes ist, wobei das Spreizband-Übertragungssignal aufgrund des verwendeten resultierenden Spreizungscodes ein halbiertes Frequenzspektrum aufweist, das zwei Seitenbänder $(B_1, B_2)$ einnimmt, die sich an den Enden eines Frequenzbereichs befinden, dessen Breite von der Frequenz des Zerhackens abhängt, wobei diese Vorrichtung **dadurch gekennzeichnet ist, dass** sie aufweist:

> • Filterungsmittel (50, 51, 52), die es ermöglichen, das vollständige Spektralband des digitalen Übertragungssignals, das aus den zwei Seitenbändern $(B_1, B_2)$ und dem sie trennenden Frequenzbereich besteht, und jedes der Seitenbänder $(B_1, B_2)$ zu isolieren,
> • Demodulations- und Entspreizungsmittel (20', 30'), die mit einem Generator einer lokalen Trägerfrequenz (32') der als Basis-Regelungsfrequenz die Mittenfrequenz des vollständigen Spektralbands, das vom digitalen Übertragungssignal eingenommen wird, oder eine der Mittenfrequenzen seiner Seitenbänder (B1, B2) nehmen kann, und mit einem lokalen Codegenerator (22') ausgestattet sind, der Repliken des resultierenden Spreizungscodes oder des anfänglichen pseudozufälligen Binärcodes erzeugen kann,
> • einen Wähler (53), der zwischen die Filterungsmittel (50, 51, 52) und die Demodulations- und Entspreizungsmittel (20', 30') eingefügt ist und es ermöglicht, an die Demodulations- und Entspreizungsmittel (20', 30') das im vom digitalen Übertragungssignal eingenommenen vollständigen Spektralband empfangene Signal oder eines der in den Seitenbändern ($B_1$, $B_2$) des digitalen Übertragungssignals empfangenen Signale anzulegen,

• Mittel (54, 55) zur Messung der Leistungen, die in den zwei Seitenbändern ($B_1$, $B_2$) des digitalen Übertragungssignals empfangen werden, die nach den Filterungsmitteln (50, 51, 52) arbeiten,

• Mittel (56) zur Erfassung von Störsignalen, die die Messwerte empfangen, die von den Leistungsmessungsmitteln (54, 55) kommen, sie mit einem Schwellwert vergleichen und die Ergebnisse dieser Vergleiche verwenden, um den Wähler (53) zu steuern und einen Basis-Regelungsfrequenz-Sollwert für den Generator der lokalen Trägerfrequenz (32') und einen Code-Sollwert für den lokalen Codegenerator (22') zu liefern.

4. Vorrichtung nach Anspruch 3, **dadurch gekennzeichnet, dass** die Mittel (56) zur Erfassung eines Störsignals eine Logik umfassen, die:

• wenn die von den Mitteln (54, 55) zur Messung der empfangenen Leistungen (54, 55) empfangenen Messwerte unter dem Schwellwert bleiben, dem Wähler (53) die Anweisung gibt, das von den Filterungsmitteln (51) stammende Signal zu wählen, das dem vollständigen Spektralband des digitalen Übertragungssignals entspricht, dem Generator (32') der lokalen Trägerfrequenz die Anweisung gibt, als Basis-Regelungsfrequenz die Mittenfrequenz des vollständigen Frequenzbands des digitalen Übertragungssignals zu nehmen, und dem lokalen Codegenerator (22') die Anweisung gibt, Repliken des resultierenden Spreizungscodes zu erzeugen, und

• wenn einer der von den Mitteln (54, 55) zur Messung der empfangenen Leistungen gelieferten Messwerte die Schwelle überschreitet, dem Wähler (53) die Anweisung gibt, das von den Filterungsmitteln (50 oder 52) stammende Signal zu wählen, das dem Seitenband ($B_1$ oder $B_2$) entspricht, das nicht von der Überschreitung der Schwelle betroffen ist, dem Generator (32') der lokalen Trägerfrequenz die Anweisung gibt, als Basis-Regelungsfrequenz die Mittenfrequenz dieses nicht betroffenen Seitenbands ($B_1$ oder $B_2$) zu nehmen, und dem lokalen Codegenerator (22') die Anweisung gibt, Repliken des anfänglichen pseudozufälligen Binärcodes zu erzeugen.

FIG.1

FIG.2

FIG.3

FIG.4

FIG.5

**EP 1 229 665 B1**

## RÉFÉRENCES CITÉES DANS LA DESCRIPTION

**Documents brevets cités dans la description**

- US 6148022 A